# EUROPÄISCHE PATENTSCHRIFT

(11) **EP 3 910 182 B1**
(45) Veröffentlichungstag und Bekanntmachung des Hinweises auf die Patenterteilung: **08.04.2026**
(21) Anmeldenummer: 21171753.3
(22) Anmeldetag: 03.05.2021
(51) Int. Cl.: F02D 41/00, F02D 41/14, F02B 37/12, F02B 37/18, F02B 37/24, F02M 35/10

(54) **VERFAHREN ZUR REGELUNG UND BEGRENZUNG EINER DREHZAHL EINES TURBOLADERS**
METHOD FOR CONTROLLING AND LIMITING THE SPEED OF A TURBOCHARGER
PROCÉDÉ DE RÉGULATION ET DE LIMITATION DE LA VITESSE DE ROTATION D'UN TURBOCOMPRESSEUR

(30) Priorität: 13.05.2020 DE 102020205991
(43) Veröffentlichungstag der Anmeldung: 17.11.2021
(73) Patentinhaber: VOLKSWAGEN AG, 38440 Wolfsburg (DE)
(72) Erfinder: Müller, Sven, 30629 Hannover (DE); Noesselt, Tobias, 30655 Hannover (DE); Calabria, Mauro, 31228 Peine (DE)

(56) Entgegenhaltungen:
- DE-A1- 102005 012 946
- DE-A1- 102008 044 156
- DE-A1- 102015 210 226
- DE-A1- 102016 012 019

## Beschreibung

Die folgende Erfindung betrifft ein Verfahren zur Regelung einer Regelgröße im Betrieb eines Turboladers nach dem unabhängigen Verfahrensanspruch. Ferner betrifft die Erfindung einen Turbolader zum Betreiben eines Verdichters nach dem unabhängigen Vorrichtungsanspruch. Zudem betrifft die Erfindung ein Computer-Programm-Produkt nach dem unabhängigen Erzeugnisanspruch.

Es sind Turbolader bekannt, die stromabwärts einer Abgasflussrichtung eines Verbrennungsmotors angeordnet werden, um die thermische Wärmeenergie und die kinetische Energie der Abgase in eine mechanische Leistung umzuwandeln. Diese mechanische Leistung kann wiederum zum Betreiben eines Verdichters genutzt werden, der Verbrennungsluft an den Verbrennungsmotor bereitstellt. Je schneller der Motor arbeitet, desto schneller dreht sich auch der Turbolader. Je schneller sich der Turbolader dreht, desto mehr Luft fördert der Verdichter, was durch die wachsende Abgasmenge wiederum den Turbolader beschleunigt. Bei einer bestimmten Drehzahl erreicht der Turbolader jedoch eine Belastungsgrenze, d. h. maximal zulässige Drehzahl, die zu mechanischen Schäden, wie z. B. hohe Reibung, und/oder thermischen Schäden, wie z. B. Überhitzung, des Turboladers führen kann.

Moderne Ladedruckregelungsverfahren basieren auf physikalischen Modellen der Luftstrecke, wie z. B. einem Verdichtermodell. Eine Einhaltung der Bauteilgrenzen findet dabei durch Begrenzung des Ladedrucksollwerts und/oder unter Berücksichtigung einer über Verdichtermodell modellierten Turboladerdrehzahl statt. Im Fall einer Leckage in einem Ansaugsystem des Verdichters wird jedoch der modellierte Frischluftmassenstrom zu klein eingeschätzt. Um die entweichende Luft zu kompensieren wird in diesem Falle der Ladedruckregler den Abgasturbolader stärker beanspruchen. Dabei besteht jedoch das Risiko, dass der Abgasturbolader über seine Belastungsgrenze hinaus betrieben wird. Somit kann ein kleines Dichtungsproblem in der Ansaugstrecke (z. B. bei fehlendem oder defektem O-Ring) zu erheblichen Schaden im Abgasturbolader führen. Eine direkte Anbindung eines Turboladerdrehzahlsensors in der Regelstrecke ist oft nicht ohne weiteres möglich, denn es würde sich ein überbestimmtes System ergeben (eine Stellgröße mit zwei Regelzielen). Bekannte Ladedruckregelungsverfahren können daher nicht für alle Betriebsbedingung robust wirken. Entweder greifen diese in einem System ohne Leckage unberechtigt ein (Leistungsverlust) oder wird die Turboladerdrehzahl im Fall einer Leckage nicht robust begrenzt (Risiko Bauteilschaden).

Einen beispielhaften Stand der Technik bilden die Schriften DE 10 2008 044 156 A1, DE 10 2005 012 946 A1 und DE 10 2015 210 226 A1.

Es ist daher die Aufgabe der vorliegenden Erfindung, die voranstehend beschriebenen Nachteile bei einem Verfahren zur Regelung einer Regelgröße im Betrieb eines Turboladers zumindest zum Teil zu überwinden. Insbesondere ist es die Aufgabe der vorliegenden Erfindung, ein Verfahren zur Regelung einer Regelgröße im Betrieb eines Turboladers, insbesondere einer Drehzahl eines Turboladers, bereitzustellen, welches einfach, mit wenig Aufwand und mit wenig Rechenleistung ausgeführt werden kann, um den Turbolader bei allen für alle Betriebsbedingungen robust und sicher anzutreiben und zuverlässig davor zu schützen, seine Belastungsgrenze zu überschreiten. Ferner ist es die Aufgabe der Erfindung, einen entsprechenden Turbolader zum Betreiben eines Verdichters zur Verfügung zu stellen. Zudem ist es die Aufgabe der Erfindung ein entsprechendes Computer-Programm-Produkt bereitzustellen.

Die erfindungsgemäße Aufgabe wird durch ein Verfahren zur Regelung und insbesondere Begrenzung einer Drehzahl eines Turboladers nach dem unabhängigen Verfahrensanspruch gelöst. Ferner wird die erfindungsgemäße Aufgabe durch einen Turbolader zum Betreiben eines Verdichters nach unabhängigen Vorrichtungsanspruch gelöst. Zudem wird die erfindungsgemäße Aufgabe durch ein Computer-Programm-Produkt nach dem unabhängigen Erzeugnisanspruch gelöst.

Die Erfindung sieht zur Lösung der Aufgabe ein Verfahren zur Regelung und insbesondere Begrenzung einer Drehzahl eines Turboladers, der in Wirkverbindung mit einem Verdichter steht, umfassend folgende Schritte:
1) Bereitstellen eines Sollwertes für die Drehzahl des Turboladers auf Basis einer modelbasierten Vorsteuerung für eine Berechnung eines Sollladedrucks vor dem Turbolader, d. h. mithilfe einer modellbasierten Vorsteuerung für eine Berechnung eines Sollladedrucks vor dem Turbolader und einer Umrechnung des Sollladedrucks vor dem Turbolader in den Sollwert für die Drehzahl des Turboladers,
2) Bestimmen eines Istwerts für die Drehzahl des Turboladers,
3) Ansteuern eines Stellglieds des Turboladers (als Stellglied kann/können bei Ottomotoren ein Wastegate oder verstellbare Leitschaufeln und bei Dieselmotoren verstellbare Leitschaufeln verwendet werden), um den Unterschied zwischen dem Sollwert und dem Istwert für die Drehzahl des Turboladers auszugleichen,
wobei im Schritt 2) beim Bestimmen des Istwerts für die Drehzahl des Turboladers ein Hauptsignal und ein Nebensignal bereitgestellt werden, wobei das Hauptsignal und das Nebensignal fusioniert werden, um den Istwert für die Drehzahl des Turboladers zu plausibilisieren.

Als Signal im Sinne der Erfindung kann die Funktion verstanden werden, die den Wert der Drehzahl in Abhängigkeit von der Zeit abbildet.

Die Erfindung erkennt dabei, dass bei einer Regelung des Ladedrucks die Belastungsgrenze des Turboladers, d. h. die maximal zulässige Drehzahl des Turboladers, nicht oder zumindest nicht im ausreichenden Maße berücksichtigt wird. Die modelbasierte Vorsteuerung umfasst ein mathematisches Modell für die Berechnung eines Sollladedrucks vor dem Turbolader (bzw. eines Solladedrucks des Verdichters). Dieses mathematische Modell basiert auf der bekannten Eulerschen Turbinenhauptgleichung. Der Sollladedruck vor dem Turbolader kann dabei bspw. für eine gewünschte Leistung des Turboladers berechnet werden.

Der Erfindungsgedanke liegt dabei darin, dass die Drehzahl des Turboladers und nicht der Ladedruck des Turboladers als Regelgröße bei der Regelung einer Regelgröße im Betrieb eines Turboladers benutzt wird. Dabei kann unmittelbar die maximal zulässige Drehzahl des Turboladers berücksichtigt oder mit anderen Worten miteingeregelt werden, bspw. als ein maximal einstellbarer Sollwert für die Drehzahl des Turboladers. Um den Sollwert für die Drehzahl des Turboladers zu erhalten, wird der Sollladedruck vor dem Turbolader aus der bekannten modelbasierten Vorsteuerung berechnet und in einen Sollwert für die Drehzahl des Turboladers umgerechnet. Der Sollladedruck ist somit als Eingangsgröße zu verstehen. Der Sollwert für die Turboladerdrehzahl kann dabei unter Berücksichtigung eines Verdichtermodells berechnet werden.

Die Erfindung stellt einen neuen Ansatz zur Bestimmung des Istwerts für die Drehzahl des Turboladers vor. Der Kerngedanke liegt dabei in der Plausibilisierung des modellierten Istwerts für die Drehzahl des Turboladers durch Abgleich zweier Signale und die Bereitstellung eines fusionierten Istwerts für die Drehzahl des Turboladers zur weiteren Verwendung im Regler.

Das Hauptsignal für die Drehzahl des Turboladers kann dabei aus dem Verdichtermodell abgeleitet werden. Ein Nebensignal für die Drehzahl des Turboladers kann entweder aus einem Turbinenmodell oder einem Sensorwert entnommen werden. In einem System ohne Leckage in der Ansaugstrecke korrelieren diese Drehzahlsignale miteinander. Im Fall einer Leckage nimmt das Hauptsignal kleinere Werte als das Nebensignal an, denn das Nebensignal wird von der Leckage nicht beeinflusst.

Die Erfindung stellt eine fusionierte Drehzahl im Schritt 2) bereit, bei der das Hauptsignal anhand des Nebensignals plausibilisiert wird. Vorteilhafterweise greift die Erfindung bei Abweichungen zwischen dem Hauptsignal und dem Nebensignal, die auf eine Leckage zurückzuführen sind, in den Drehzahlregelkreis ein. Im Falle einer Leckage kann die Hauptdrehzahl angehoben werden. Mithilfe der Erfindung kann somit ein robustes Verhindern von Überdrehzahlen unabhängig von der momentanen Betriebssituation ermöglicht werden. Gleichzeitig geschieht der Eingriff in den Regelkreis derart, dass Rückwirkungen auf das dynamische Verhalten des geschlossenen Kreises (insbesondere in Bezug auf die Stabilität und die Schwingungsneigung) minimiert werden.

Die fusionierte Drehzahl wird wie folgt bestimmt:
In Abhängigkeit des Leckagefaktors wird ein fusioniertes Drehzahlsignal abgebildet. Dies kann bspw. mithilfe eines Kalman-Filters umgesetzt werden, dessen Parameter in Abhängigkeit des Leckagefaktors festgelegt werden. Somit kann ein verbessertes Verfahren zur Regelung der Drehzahl des Turboladers bereitgestellt werden, welches einfach, mit wenig Aufwand und mit wenig Rechenleistung ausgeführt werden kann.

Die fusionierte Drehzahl kann auch ferner wie folgt bestimmt werden:
In Abhängigkeit des Hauptsignals wird eine minimale und eine maximale Schwelle berechnet. Durch Abgleich zwischen dem Hauptsignal und dem Nebensignal wird ein Leckagefaktor abgebildet, bspw. wie folgt:
Ist das Nebensignal kleiner als die minimale Schwelle, wird ein Leckagefaktor gleich 0 berechnet.

Ist das Nebensignal größer als die maximale Schwelle, wird ein Leckagefaktor gleich 1 berechnet.

Liegt das Nebensignal zwischen beiden Schwellen wird ein Leckagefaktor zwischen 0 und 1 interpoliert.

Ferner kann die Erfindung bei einem Verfahren zur Regelung einer Drehzahl eines Turboladers vorsehen, dass im Schritt 1) beim Bereitstellen des Sollwerts für die Drehzahl des Turboladers eine Sollwertbegrenzung für die Drehzahl des Turboladers erfolgt. Dabei kann auf eine vorteilhafte Weise eine maximal zulässige Drehzahl des Turboladers als Grenzwert berücksichtigt werden. Durch die Berücksichtigung der Sollturboladerdrehzahl besteht vorteilhafterweise die Möglichkeit, den druckbasierten Wert durch einen mechanischen Grenzwert zu deckeln, sodass der Regler beim Erreichen dieser Grenze genau auf diesen Grenzwert regeln kann. Dies stellt sicher, dass sowohl dynamisch als auch stationär der Grenzwert die Momentengrenze darstellt.

Des Weiteren kann die Erfindung bei einem Verfahren zur Regelung einer Drehzahl eines Turboladers vorsehen, dass im Schritt 2) der Istwert für die Drehzahl des Turboladers im Nebensignal erfasst, d. h. gemessen und/oder sensiert, wird. Hierzu kann ein Drehzahlsensor vorgesehen sein. Somit kann bei der Drehzahlregelstrecke die unmittelbare Berücksichtigung eines realen Drehzahlwertes des Turboladers ermöglicht werden. Außerdem kann somit die reale Drehzahl des Turboladers im besonderen Maße bei der Sollwertbegrenzung miteingeregelt werden. Auch die Langzeiteinflüsse bei dem Turbolader, wie die Verschmutzung oder der Verschleiß des Turboladers, die sich nicht durch die modelbasierte Vorsteuerung abbilden lassen, können durch die Miteinregelung des realen Drehzahlwertes des Turboladers berücksichtigt werden.

Darüber hinaus kann die Erfindung bei einem Verfahren zur Regelung einer Drehzahl eines Turboladers vorsehen, dass im Schritt 2) der Istwert für die Drehzahl des Turboladers im Nebensignal aus einem bzw. über ein Turbinenmodell bereitgestellt wird. Das Turbinenmodell kann bspw. kennfeldbasiert sein und die Drehzahl der Turbine in Abhängigkeit eines Luftmassenstorms und/oder Drehzahlverhältnisse vor und nach der Turbine abbilden. Mithilfe einer turbinenmodellbasierten Berechnung der Drehzahl für den Turbolader kann auf einen Drehzahlsensor verzichtet werden, wobei das Nebensignal mithilfe des Turbinenmodells modelliert wird. Auch dabei kann sichergestellt werden, dass ein Nebensignal bereitgestellt wird, welches von etwaigen Leckagen in der Ansaugleitung vor dem Verdichter nicht beeinflusst ist.

Zudem kann die Erfindung bei einem Verfahren zur Regelung einer Drehzahl eines Turboladers vorsehen, dass im Schritt 2) der Istwert für die Drehzahl des Turboladers im Hauptsignal aus einem bzw. über ein Verdichtermodell, insbesondere mithilfe einer Umrechnung aus einem erfassten Istladedruck des Verdichters bzw. Istladedruck vor dem Turbolader, bereitgestellt wird. Vorteilhafterweise kann der Istwert für die Drehzahl des Turboladers analog dem Sollwert für die Drehzahl des Turboladers, vorzugsweise mithilfe derselben Umrechnung bzw. mit demselben Verstärkungsfaktor, berechnet werden. Hierzu kann die gleiche Soft- und/oder Hardware benutzt werden wie bei den vorhandenen Regelungen.

Außerdem kann die Erfindung bei einem Verfahren zur Regelung einer Drehzahl eines Turboladers vorsehen, dass für den Sollwert für die Drehzahl des Turboladers im Schritt 1) und den Istwert für die Drehzahl des Turboladers im Hauptsignal im Schritt 2) das gleiche mathematische Modell, insbesondere das Verdichtermodell, und/oder die gleichen Parameter im Betrieb des Turboladers benutzt werden/wird. Auf diese Weise kann eine Konsistenz im Druckpfad durch den Turbolader eingestellt werden.

Nach einem weiteren Vorteil der Erfindung kann im Schritt 1) und/oder im Schritt 2) mindestens eine thermodynamische Größe als Parameter im Betrieb des Turboladers benutzt bzw. berücksichtigt werden, wie eine Temperatur vor dem Verdichter, ein Druck vor dem Verdichter und/oder ein Massenstrom einer Ansaugluft durch den Verdichter. Somit können die realen Umstände im Betrieb des Turboladers berücksichtigt werden, die den Ladedruck und/oder die Drehzahl des Turboladers beeinflussen können.

Ferner wird die erfindungsgemäße Aufgabe durch einen Turbolader zum Betreiben eines Verdichters gelöst, der zum Bereitstellen einer Verbrennungsluft an einen Verbrennungsmotor dienen kann. Der Turbolader weist erfindungsgemäß eine Steuereinheit auf, die dazu ausgeführt ist, den Betrieb des Turboladers nach einem Verfahren zu regeln, welches wie oben beschrieben ausgeführt werden kann. Die Steuereinheit kann dabei in einem Motorsteuergerät des Verbrennungsmotors oder als eine separate Steuereinheit des Turboladers umgesetzt werden. Mithilfe des erfindungsgemäßen Turboladers können die gleichen Vorteile erreicht werden, die oben im Zusammenhang mit dem erfindungsgemäßen Verfahren beschrieben wurden. Auf diese Vorteile wird vorliegend vollumfänglich Bezug genommen.

Weiterhin sieht die Erfindung zur Lösung der Aufgabe ein Computer-Programm-Produkt vor, welches in einer Speichereinheit der oben beschriebenen Steuereinheit hinterlegbar ist, und welches bei einer zumindest teilweisen Ausführung in einer Recheneinheit der Steuereinheit ein Verfahren durchführt, welches wie oben beschrieben ablaufen kann. Auch mithilfe des erfindungsgemäßen Computer-Programm-Produkts können die gleichen Vorteile erreicht werden, die oben im Zusammenhang mit dem erfindungsgemäßen Verfahren beschrieben wurden. Auf diese Vorteile wird vorliegend ebenfalls vollumfänglich Bezug genommen.

Weitere, die Erfindung verbessernde Maßnahmen werden nachstehend mit der Beschreibung der bevorzugten Ausführungsbeispiele der Erfindung anhand der Figuren näher dargestellt. Dabei können die in den Ansprüchen und in der Beschreibung erwähnten Merkmale jeweils einzeln für sich oder in beliebiger Kombination erfindungswesentlich sein. Dabei ist zu beachten, dass die Figuren nur einen beschreibenden Charakter haben und nicht dazu gedacht sind, die Erfindung in irgendeiner Form einzuschränken. Es zeigen:
- Fig. 1: ein schematisches Ablaufdiagramm eines möglichen Regelungsverfahrens Sinne der Erfindung, bei dem die Drehzahl eines Turboladers als Regelgröße geregelt wird,
- Fig. 2: ein schematisches Ablaufdiagramm eines Verdichtermodells,
- Fig. 3: eine schematische Darstellung eines Hauptsignals und eines Nebensignals im Sinne der Erfindung,
- Fig. 4: ein schematisches Ablaufdiagramm eines erfindungsgemäßen Regelungsverfahrens, bei dem die Drehzahl des Turboladers als Regelgröße geregelt wird,
- Fig. 5: eine schematische Erklärung einer Fusionierung eines Istwerts für eine Drehzahl eines Turboladers im Rahmen der Erfindung,
- Fig. 6: ein Diagramm für eine erfindungsgemäße Regelung und
- Fig. 7: ein Diagramm für eine bekannte Regelung.

In den unterschiedlichen Figuren sind gleiche Merkmale der Erfindung stets mit denselben Bezugszeichen versehen, weshalb diese in der Regel nur einmal beschrieben werden.

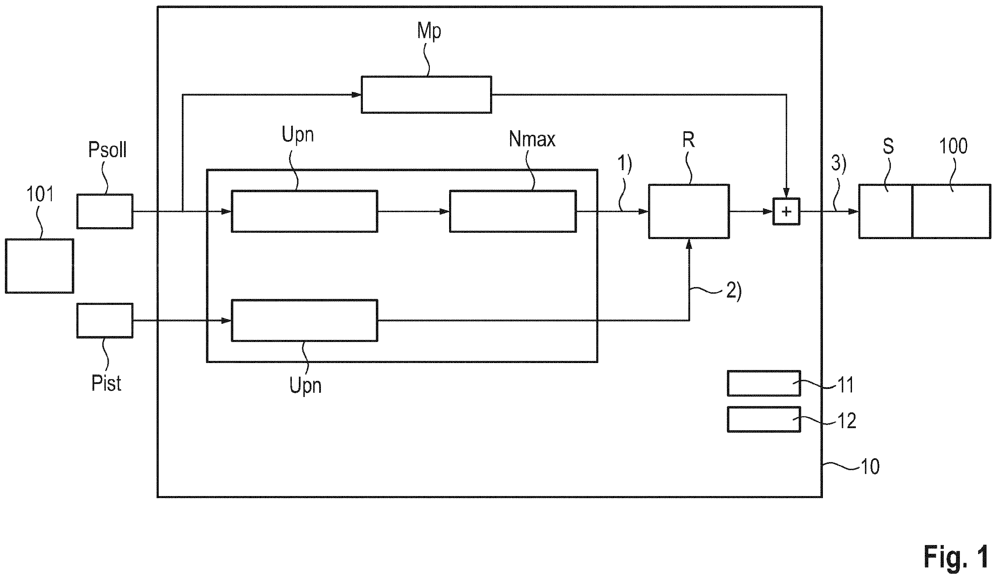

Die Figur 1 zeigt schematisch das Prinzip einer Regelung R einer Drehzahl N im Betrieb eines Turboladers 100 für einen Verdichter 101, bei der die Drehzahl N als Regelgröße aus einem Verdichtermodell VM für einen Ladedruck P eines Turboladers 100 hergeleitet wird.

Das Ziel der Regelung R ist, dass der Turbolader 100 bei niedrigen Abgasströmen eine ausreichende Leistung liefert und bei hohen Drehzahlen seine Belastungsgrenze, insbesondere seine maximal zulässige Drehzahl N, möglichst nicht überschreitet, und zwar bei unterschiedlichen Betriebsbedingungen, sogar bei Leckagen L im Ansaugsystem des Verdichters 101.

Die Figur 1 zeigt schematisch den Ablauf eines möglichen Verfahrens im Sinne der Erfindung zur Regelung R und insbesondere Begrenzung einer Drehzahl N eines Turboladers 100, der in Wirkverbindung mit einem Verdichter 101 steht, umfassend folgende Schritte:
1) Bereitstellen eines Sollwertes Nsoll für die Drehzahl N des Turboladers 100 auf Basis einer modelbasierten Vorsteuerung Mp für eine Berechnung eines Sollladedrucks Psoll vor dem Turbolader 100, d. h. mithilfe einer modelbasierten Vorsteuerung Mp für eine Berechnung eines Sollladedrucks Psoll vor dem Turbolader 100 und einer Umrechnung Upn des Sollladedrucks Psoll vor dem Turbolader 100 in den Sollwert Nsoll für die Drehzahl N des Turboladers 100,
2) Bestimmen eines Istwerts Nist für die Drehzahl N des Turboladers 100,
3) Ansteuern eines Stellglieds S des Turboladers 100, um den Unterschied zwischen dem Sollwert Nsoll und dem Istwert Nist für die Drehzahl N des Turboladers 100 auszugleichen.

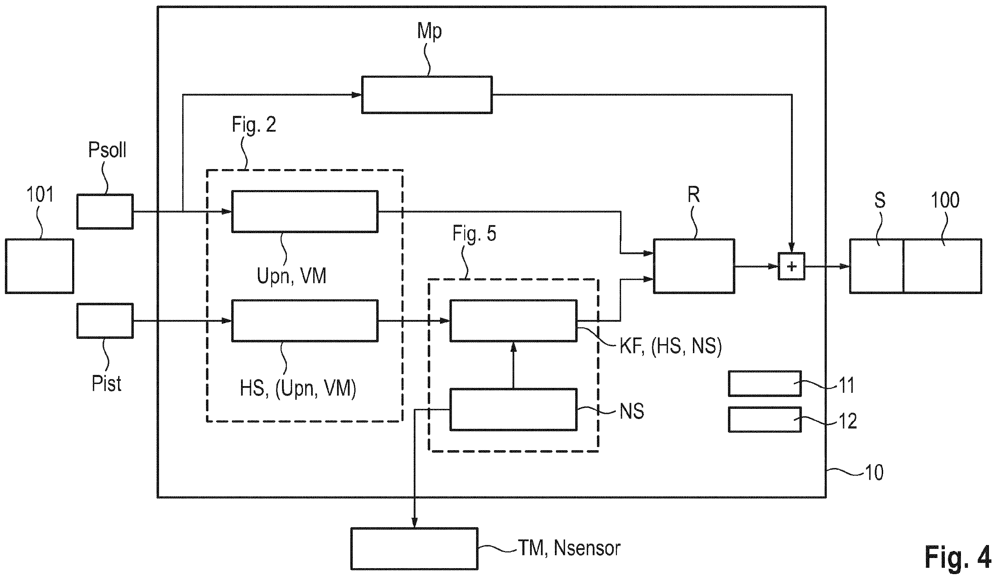

Erfindungsgemäß werden im Schritt 2) beim Bestimmen des Istwerts Nist für die Drehzahl N des Turboladers 100 ein Hauptsignal HS und ein Nebensignal NS bereitgestellt, wobei das Hauptsignal HS und das Nebensignal NS fusioniert werden, wie es die Figuren 4, 5 und 6 zeigen, um den Istwert Nist für die Drehzahl N des Turboladers 100 zu plausibilisieren.

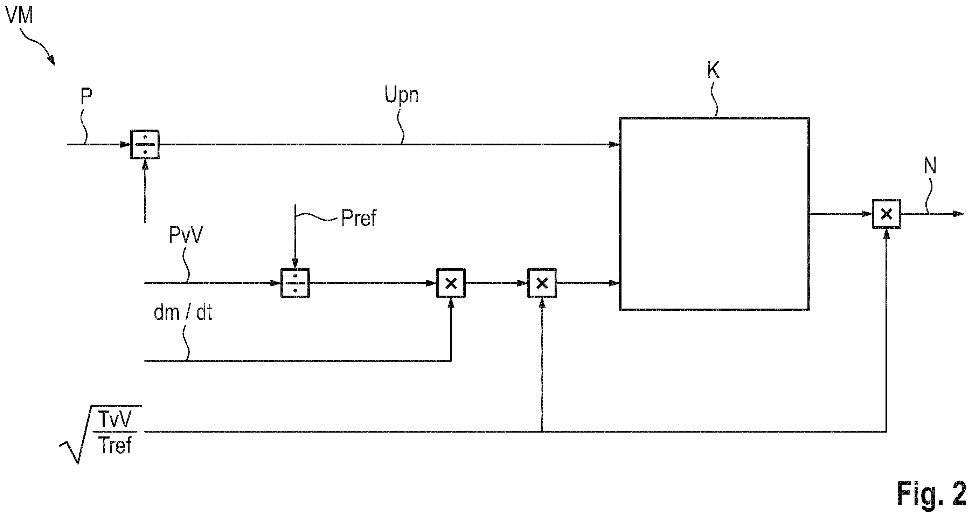

Die Erfindung schlägt dabei zum einen vor, die Drehzahl N des Turboladers 100 und nicht den Ladedruck P vor dem Turbolader 100 als Regelgröße bei der Regelung R einer Regelgröße im Betrieb eines Turboladers 100 zu benutzen (vgl. die Figuren 1 und 2). Dabei kann unmittelbar die maximal zulässige Drehzahl Nmax des Turboladers 100 berücksichtigt oder mit anderen Worten miteingeregelt werden, bspw. als ein maximal einstellbarer Sollwert Nsoll für die Drehzahl N des Turboladers 100 (vgl. die Figur 2). Um den Sollwert Nsoll für die Drehzahl N des Turboladers 100 zu erhalten, wird der Sollladedruck Psoll vor dem Turbolader 100 aus der bekannten modelbasierten Vorsteuerung Mp berechnet und in einen Sollwert Nsoll für die Drehzahl N des Turboladers 100 umgerechnet (eine beispielhafte Umrechnung Upn nach einem Verdichtermodell VM ist in der Figur 2 zu sehen).

Ferner wird ein Istwert Nist für die Drehzahl N des Turboladers 100 im Rahmen der Erfindung als ein fusionierter Istwert Nist für die Drehzahl N des Turboladers 100 aus zwei Signalen HS, NS ermittelt (vgl. die Figuren 4, 5 und 6). Wie es insbesondere die Figuren 4, 5 und 6 zeigen, erfolgt im Rahmen der Erfindung eine Plausibilisierung des im Schritt 2) modellierten Istwerts Nist für die Drehzahl N des Turboladers 100 durch Abgleich zweier Signale HS, NS.

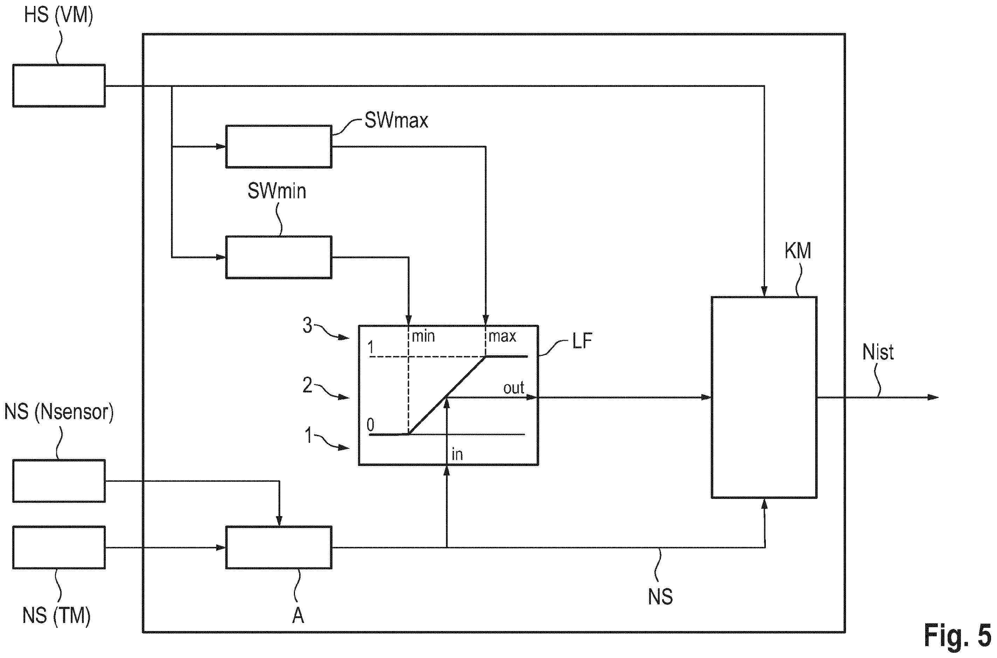

Das Hauptsignal HS für die Drehzahl N des Turboladers 100 kann nach wie vor aus dem Verdichtermodell VM abgeleitet werden. Ein Nebensignal NS für die Drehzahl N des Turboladers 100 kann entweder aus einem Turbinenmodell TM oder einem Sensorwert Nsensor entnommen werden, wie dies die Figuren 4 und 5 andeuten.

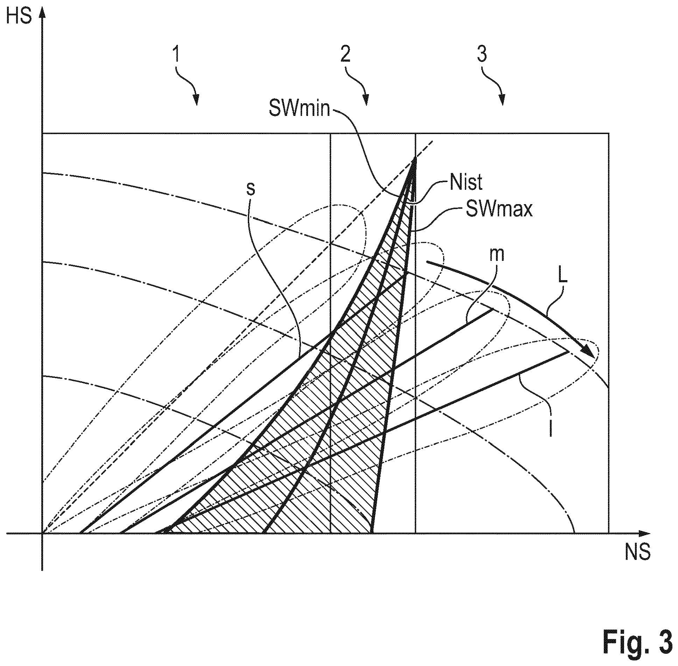

Wie in der Figur 3 dargestellt ist, korrelieren diese Drehzahlsignale HS, NS in einem System ohne eine Leckage L in der Ansaugstrecke vor dem Verdichter 101 miteinander. Im Fall einer Leckage L in der Ansaugstrecke vor dem Verdichter 101 nimmt das Hauptsignal HS kleinere Werte als das Nebensignal NS an, denn das Nebensignal NS wird von der Leckage L nicht beeinflusst.

In der Figur 3 sind dabei drei Bereiche 1, 2, 3 angedeutet: ein zulässiger Bereich 1 (keine Leckage s), Grenzbereich 2 (mögliche oder mittlere Leckage m) und ein unzulässiger Bereich 3 (große Leckage l).

Wie es in den Figuren 3 und 5 angedeutet ist, kann in dem zulässigen Bereich 1 der Istwert Nist für die Drehzahl N des Turboladers 100 im Wesentlichen gleich dem Hauptsignal HS gesetzt werden. Im Grenzbereich 2 kann das Hauptsignal HS vorteilhafterweise angehoben werden. Im unzulässigen Bereich 3 kann der Istwert Nist für die Drehzahl N des Turboladers 100 im Wesentlichen gleich dem Nebensignal NS bestimmt werden.

Wie es in der Figur 5 angedeutet ist, greift die Erfindung bei Abweichungen zwischen dem Hauptsignal HS und dem Nebensignal NS, die auf eine Leckage L zurückzuführen sind, in den Drehzahlregelkreis gemäß der Figur 1 ein.

Der Istwert Nist der fusionierten Drehzahl Nist wird, wie es in der Figur 5 gezeigt ist, wie folgt bestimmt:
In Abhängigkeit des Leckagefaktors LF wird ein plausibilisierter Istwert Nist der fusionierten Drehzahl N abgebildet.

Wie es die Figur 5 andeutet, kann der plausibilisierte Istwert Nist der fusionierten Drehzahl N bspw. mithilfe eines Kalman-Filters KF bestimmt werden, dessen Parameter in Abhängigkeit des Leckagefaktors LF festgelegt werden.

Der Istwert Nist der fusionierten Drehzahl Nist kann auch ferner, wie es in der Figur 5 gezeigt ist, wie folgt bestimmt werden:
In Abhängigkeit des Hauptsignals HS werden ein minimaler Schwellenwerk SWmin und ein maximaler Schwellenwert SWmax bestimmt (vgl. die Figur 3).

Durch Vergleich zwischen dem Hauptsignal HS und dem Nebensignal NS wird ein Leckagefaktor LF abgebildet, bspw. wie folgt:
Ist das Nebensignal NS kleiner als der minimale Schwellenwerk SWmin, wird ein Leckagefaktor gleich 0 abgebildet.

Ist das Nebensignal NS größer als der maximale Schwellenwert SWmax, wird ein Leckagefaktor gleich 1 abgebildet.

Liegt das Nebensignal NS zwischen beiden Schwellenwerten SWmin und SWmax wird ein Leckagefaktor zwischen 0 und 1 interpoliert.

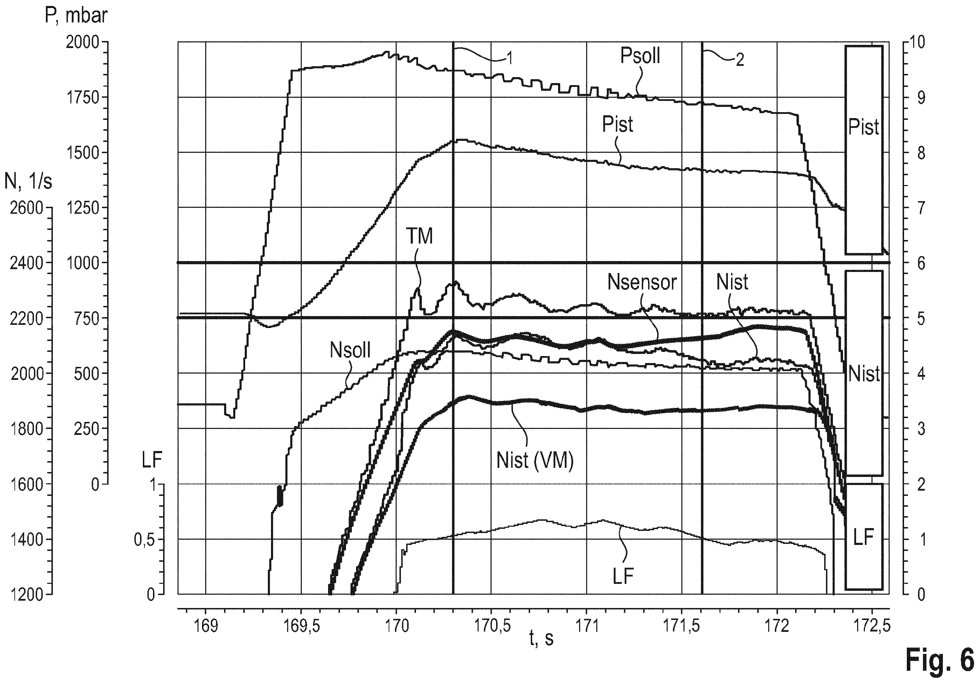

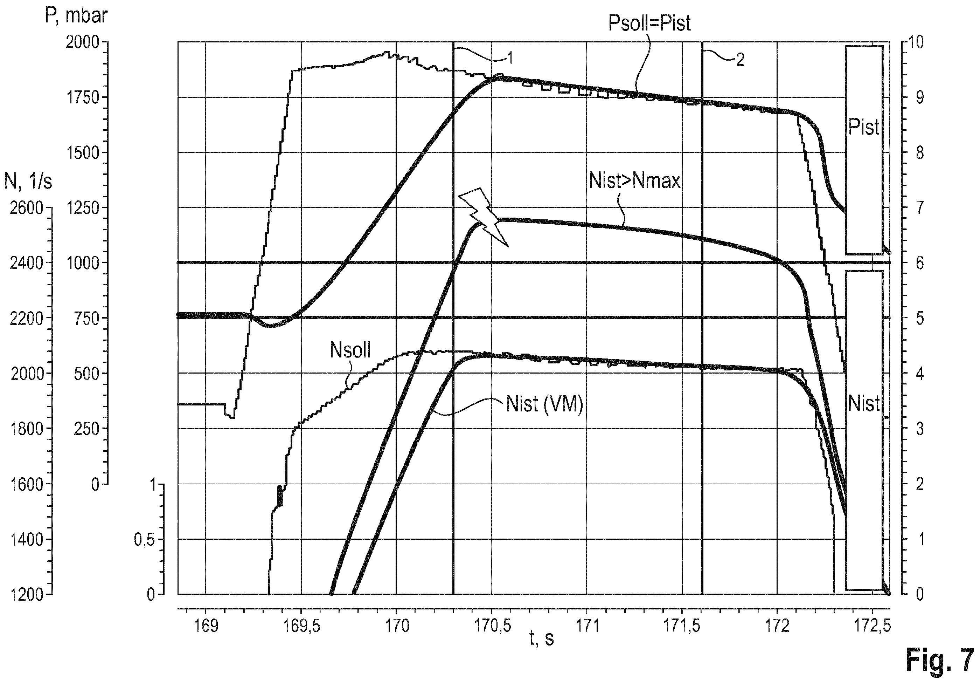

Mithilfe der Erfindung kann ein robustes Verhindern (vgl. die Figur 6) von Überdrehzahlen Nist>Nmax (vgl. die Figur 7) unabhängig von der momentanen Betriebssituation ermöglicht werden. Zugleich erfolgt der Eingriff in den Regelkreis derart, dass Rückwirkungen auf das dynamische Verhalten des geschlossenen Regelkreises in Bezug auf die Stabilität und die Schwingungsneigung minimiert werden.

Vorteilhafterweise kann im Schritt 1) beim Bereitstellen des Sollwerts Nsoll für die Drehzahl N des Turboladers 100 eine Sollwertbegrenzung für die Drehzahl N des Turboladers 100 erfolgen, bei der die maximal zulässige Drehzahl Nmax des Turboladers 100 als Grenzwert berücksichtigt wird. Durch die Regelung R der Drehzahl N besteht vorteilhafterweise die Möglichkeit, den druckbasierten Wert der Drehzahl N durch einen mechanischen Grenzwert zu deckeln, sodass der Regler bei Erreichen dieser Grenze genau auf diesen Grenzwert regeln kann.

Gemäß der Figur 2 ist es denkbar, dass für den Sollwert Nsoll für die Drehzahl N des Turboladers 100 im Schritt 1) und den Istwert Nist für die Drehzahl N des Turboladers 100 im Hauptsignal HS im Schritt 2) das gleiche mathematische Modell, insbesondere das Verdichtermodell VM, und/oder die gleichen (thermodynamischen) Parameter im Betrieb des Turboladers 100 benutzt werden/wird. Das Verdichtermodell VM und die benutzen Parameter werden mithilfe der Figur 2 erklärt.

Wie es die Figur 2 zeigt, können bei der Umrechnung Upn des Ladedruckes P in die Ladedrehzahl N des Turboladers 100 folgende thermodynamischen Größen als Parameter im Betrieb des Turboladers 100 benutzt bzw. berücksichtigt werden: ein Druck PvV vor dem Verdichter 101, ein Massenstrom dm/dt einer Ansaugluft durch den Verdichter 101 sowie eine Temperatur vor dem TvV vor dem Verdichter 101. Wie es in der Figur 2 gezeigt ist, fließen diese Parameter über ein Kennfeld K für die Drehzahl N des Turboladers 100 ein.

Die Figur 6 zeigt eine Regelung R im Sinne der Erfindung im Falle einer Leckage L bei der als Nebensignal NS über ein Turbinenmodell TM ermittelt wurde. Zugleich ist es denkbar, dass die Drehzahl N für das Nebensignal NS sensiert werden kann. Gemäß der Figur 5 ist es weiterhin denkbar, dass beide Möglichkeiten zur Bildung des Nebensignals NS im Rahmen einer Auswahl A in die Regelung R einfließen können. Da der Regler nun eine fusionierte Drehzahl Nist verwendet, die größer als der Sollwert Nsoll ist, wird die Ladedruckregelabweichung (~300 mbar) vom Regler nicht kompensiert.

Die Figur 7 zeigt eine Regelung ohne eine Fusionierung des Istwerts im Sinne der Erfindung, die in der Figur 6 berücksichtigt wurde. In der Figur 7 regelt der Regler den Ladedruck Pist bzw. die über Verdichter modellierten Drehzahl Nist auf die Solldrehzahl Nsoll ein und gefährdet dabei den Turbolader T über die Belastungsgrenze Nist>Nmax.

Der Turbolader 100, der gemäß einem Verfahren betrieben werden kann, stellt neben dem Verfahren einen weiteren Aspekt der Erfindung dar. Wie es in der Figur 4 gezeigt ist, weist der Turbolader 100 erfindungsgemäß eine Steuereinheit 10 auf, die dazu ausgeführt ist, den Turbolader 100 entsprechend zu regeln. Denkbar ist dabei, dass die Steuereinheit 10 in einem Motorsteuergerät 10* eines Verbrennungsmotors oder als eine separate Steuereinheit 10 des Turboladers 100 ausgebildet werden kann. In der Steuereinheit 10 ist eine Speichereinheit 11 vorgesehen, in der ein Computer-Programm-Produkt hinterlegt werden kann, welches bei einer zumindest teilweisen Ausführung in einer Recheneinheit 12 der Steuereinheit 10 ein Verfahren durchführt, welches wie oben beschrieben ablaufen kann.

Die voranstehende Beschreibung der Figuren beschreibt die vorliegende Erfindung ausschließlich im Rahmen von Beispielen. Selbstverständlich können einzelne Merkmale der Ausführungsformen, sofern es technisch sinnvoll ist, frei miteinander kombiniert werden, ohne den Rahmen der Erfindung zu verlassen.

### Bezugszeichenliste

- 100: Turbolader
- 101: Verdichter

- 10: Steuereinheit
- 10*: Motorsteuergerät

- 11: Speichereinheit
- 12: Recheneinheit

- 1: zulässiger Bereich
- 2: Grenzbereich
- 3: unzulässiger Bereich

- A: Auswahl aus dem gemessenen Drehzahlwert oder dem Drehzahlwert gemäß dem Turbinenmodell

- K: Kennfeld

- KF: Kalman-Filter

- L: Leckage

- s: kleine Leckage
- m: mittlere Leckage
- I: große Leckage

- LF: Leckagefaktor

- Mp: modellbasierte Vorsteuerung

- N: Drehzahl

- Nsoll: Sollwert für die Drehzahl
- Nmax: maximal zulässige Drehzahl

- Nist: Istwert für die Drehzahl
- HS: Hauptsignal
- NS: Nebensignal
- Nsensor: gemessene Drehzahl

- P: Ladedruck
- Psoll: Sollladedruck
- Pist: Istladedruck
- PvV: Druck vor dem Verdichter
- Pref: Referenzdruck

- R: Regelung
- S: Stellglied

- SWmin: minimaler Schwellenwert
- SWmax: maximaler Schwellenwert

- TvV: Temperatur vor dem Verdichter
- Tref: Referenztemperatur

- dm/dt: Massenstrom

- Upn: Umrechnung Ladedruck in Drehzahl

- TM: Turbinenmodell
- VM: Verdichtermodell

## Patentansprüche

1. Verfahren zur Regelung (R) einer Drehzahl eines Turboladers (100), der in Wirkverbindung mit einem Verdichter (101) steht, umfassend folgende Schritte:
1) Bereitstellen eines Sollwertes (Nsoll) für die Drehzahl (N) des Turboladers (100) auf Basis einer modellbasierten Vorsteuerung (Mp) für eine Berechnung eines Sollladedrucks (Psoll) vor dem Turbolader (100),
2) Bestimmen eines Istwerts (Nist) für die Drehzahl (N) des Turboladers (100),
3) Ansteuern eines Stellglieds (S) des Turboladers (100), um den Unterschied zwischen dem Sollwert (Nsoll) und dem Istwert (Nist) für die Drehzahl (N) des Turboladers (100) auszugleichen,
wobei im Schritt 2) beim Bestimmen des Istwerts (Nist) für die Drehzahl (N) des Turboladers (100) ein Hauptsignal (HS) und ein Nebensignal (NS) bereitgestellt werden, wobei das Hauptsignal (HS) und das Nebensignal (NS) fusioniert werden, um den Istwert (Nist) für die Drehzahl (N) des Turboladers (100) zu plausibilisieren,
wobei im Schritt 2) aus dem Hauptsignal (HS) ein minimaler Schwellenwert (SWmin) und ein maximaler Schwellenwert (SWmax) berechnet werden,
wobei in Abhängigkeit von dem Nebensignal (NS), dem minimalen Schwellenwert (SWmin) und dem maximalen Schwellenwert (SWmax) ein Leckagefaktor (LF) abgebildet wird,
wobei in Abhängigkeit des Leckagefaktors (LF) der Istwert (Nist) der fusionierten Drehzahl (N) abgebildet wird, und
wobei in einem System ohne Leckage in der Ansaugstrecke das Hauptsignal (HS) und das Nebensignal (NS) miteinander korrelieren.

2. Verfahren nach Anspruch 1,
**dadurch gekennzeichnet,**
**dass** der Leckagefaktor (LF) gleich 0 abgebildet wird, wenn das Nebensignal (NS) kleiner als der minimale Schwellenwert (SWmin) ist,
oder dass der Leckagefaktor gleich 1 abgebildet wird, wenn das Nebensignal (NS) größer als der maximale Schwellenwert (SWmax) ist,
oder dass der Leckagefaktor (LF) zwischen 0 und 1 interpoliert wird, wenn das Nebensignal (NS) zwischen dem minimalen Schwellenwert (SWmin) und dem maximalen Schwellenwert (SWmax) ist.

3. Verfahren nach einem der vorhergehenden Ansprüche,
**dadurch gekennzeichnet,**
**dass** das Hauptsignal (HS) und das Nebensignal (NS) mithilfe eines Kalman-Filters (KF) fusioniert werden.

4. Verfahren nach einem der vorhergehenden Ansprüche,
**dadurch gekennzeichnet,**
**dass** im Schritt 1) beim Bereitstellen des Sollwerts (Nsoll) für die Drehzahl (N) des Turboladers (100) eine Sollwertbegrenzung für die Drehzahl (N) des Turboladers (100) erfolgt.

5. Verfahren nach einem der vorhergehenden Ansprüche,
**dadurch gekennzeichnet,**
**dass** im Schritt 2) der Istwert (Nist) für die Drehzahl (N) des Turboladers (100) im Nebensignal (NS) erfasst wird.

6. Verfahren nach einem der vorhergehenden Ansprüche 1 bis 4,
**dadurch gekennzeichnet,**
**dass** im Schritt 2) der Istwert (Nist) für die Drehzahl (N) des Turboladers (100) im Nebensignal (NS) aus einem Turbinenmodell (TM) bereitgestellt wird.

7. Verfahren nach einem der vorhergehenden Ansprüche,
**dadurch gekennzeichnet,**
**dass** im Schritt 2) der Istwert (Nist) für die Drehzahl (N) des Turboladers (100) im Hauptsignal (HS) aus einem Verdichtermodell (VM), insbesondere mithilfe einer Umrechnung aus einem erfassten Istladedruck (Pist), bereitgestellt wird.

8. Verfahren nach einem der vorhergehenden Ansprüche,
**dadurch gekennzeichnet,**
**dass** für den Sollwert (Nsoll) für die Drehzahl (N) des Turboladers (100) im Schritt 1) und den Istwert (Nist) für die Drehzahl (N) des Turboladers (100) im Hauptsignal (HS) im Schritt 2) das gleiche mathematische Modell und/oder die gleichen Parameter im Betrieb des Turboladers (100) benutzt werden/wird.

9. Verfahren nach einem der vorhergehenden Ansprüche,
**dadurch gekennzeichnet,**
**dass** im Schritt 1) und/oder im Schritt 2) mindestens eine thermodynamische Größe als Parameter im Betrieb des Turboladers (100) benutzt wird, wie eine Temperatur (TvV) vor dem Verdichter (101), ein Druck (PvV) vor dem Verdichter (101) und/oder ein Massenstrom (dm/dt) einer Ansaugluft durch den Verdichter (101).

10. Turbolader (100) zum Betreiben eines Verdichters (101),
aufweisend eine Steuereinheit (10), die dazu ausgeführt ist, den Betrieb des Turboladers (100) nach einem Verfahren gemäß einem der vorgehenden Ansprüche zu regeln.

11. Computer-Programm-Produkt, welches in einer Speichereinheit (11) der Steuereinheit (10) nach dem vorhergehenden Anspruch hinterlegbar ist, und welches bei einer zumindest teilweisen Ausführung in einer Recheneinheit (12) der Steuereinheit (10) ein Verfahren nach einem der vorhergehenden Ansprüche 1 bis 9 durchführt.

## Claims

1. Method for controlling (R) a speed of a turbocharger (100) which is operatively connected to a compressor (101), comprising the following steps:
1) providing a target value (Nsoll) for the speed (N) of the turbocharger (100) on the basis of a model-based pre-control (Mp) for calculating a target boost pressure (Psoll) upstream of the turbocharger (100),
2) determining an actual value (Nist) for the speed (N) of the turbocharger (100),
3) controlling an actuator (S) of the turbocharger (100) in order to compensate for the difference between the target value (Nsoll) and the actual value (Nist) for the speed (N) of the turbocharger (100),
wherein, in step 2), when determining the actual value (Nist) for the speed (N) of the turbocharger (100), a main signal (HS) and a secondary signal (NS) are provided, wherein the main signal (HS) and the secondary signal (NS) are fused in order to make the actual value (Nist) for the speed (N) of the turbocharger (100) plausible,
wherein, in step 2), a minimum threshold (SWmin) and a maximum threshold (SWmax) are calculated from the main signal (HS),
wherein a leakage factor (LF) is mapped according to the secondary signal (NS), the minimum threshold (SWmin) and the maximum threshold (SWmax),
wherein the actual value (Nist) of the fused speed (N) is mapped according to the leakage factor (LF), and
wherein, in a system without leakage in the intake path, the main signal (HS) and the secondary signal (NS) correlate with each other.

2. Method according to claim 1,
**characterized in that**
the leakage factor (LF) is mapped as 0 when the secondary signal (NS) is less than the minimum threshold (SWmin),
**or in that** the leakage factor is mapped as 1 when the secondary signal (NS) is greater than the maximum threshold (SWmax),
**or in that** the leakage factor (LF) is interpolated between 0 and 1 when the secondary signal (NS) is between the minimum threshold (SWmin) and the maximum threshold (SWmax).

3. Method according to any of the preceding claims,
**characterized in that**
the main signal (HS) and the secondary signal (NS) are fused by means of a Kalman filter (KF).

4. Method according to any of the preceding claims,
**characterized in that,**
in step 1), when providing the target value (Nsoll) for the speed (N) of the turbocharger (100), a target value limitation for the speed (N) of the turbocharger (100) is implemented.

5. Method according to any of the preceding claims,
**characterized in that,**
in step 2), the actual value (Nist) for the speed (N) of the turbocharger (100) is detected in the secondary signal (NS).

6. Method according to any of the preceding claims 1 to 4,
**characterized in that,**
in step 2), the actual value (Nist) for the speed (N) of the turbocharger (100) in the secondary signal (NS) is provided from a turbine model (TM).

7. Method according to any of the preceding claims,
**characterized in that,**
in step 2), the actual value (Nist) for the speed (N) of the turbocharger (100) in the main signal (HS) is provided from a compressor model (VM), in particular by means of a conversion from a detected actual boost pressure (Pist).

8. Method according to any of the preceding claims,
**characterized in that**
the same mathematical model and/or the same parameters is/are used in the operation of the turbocharger (100) for the target value (Nsoll) for the speed (N) of the turbocharger (100) in step 1) and the actual value (Nist) for the speed (N) of the turbocharger (100) in the main signal (HS) in step 2).

9. Method according to any of the preceding claims,
**characterized in that,**
in step 1) and/or in step 2), at least one thermodynamic variable is used as a parameter in the operation of the turbocharger (100), such as a temperature (TvV) upstream of the compressor (101), a pressure (PvV) upstream of the compressor (101), and/or a mass flow rate (dm/dt) of intake air through the compressor (101).

10. Turbocharger (100) for operating a compressor (101),
comprising a control unit (10) designed to control the operation of the turbocharger (100) according to a method according to any of the preceding claims.

11. Computer program product which can be stored in a memory unit (11) of the control unit (10) according to the preceding claim, and which, when at least partially executed in a computing unit (12) of the control unit (10), carries out a method according to any of the preceding claims 1 to 9.

## Revendications

1. Procédé pour la régulation (R) d'une vitesse de rotation d'un turbocompresseur (100) qui est en liaison active avec un compresseur (101), comprenant les étapes suivantes :
1) fourniture d'une valeur de consigne (Nsoll) pour la vitesse de rotation (N) du turbocompresseur (100) sur la base d'une commande pilote (Mp) basée sur un modèle pour un calcul d'une pression de charge de consigne (Psoll) en amont du turbocompresseur (100),
2) détermination d'une valeur réelle (Nist) pour la vitesse de rotation (N) du turbocompresseur (100),
3) commande d'un organe de réglage (S) du turbocompresseur (100) afin de compenser la différence entre la valeur de consigne (Nsoll) et la valeur réelle (Nist) pour la vitesse de rotation (N) du turbocompresseur (100),
dans lequel, à l'étape 2), lors de la détermination de la valeur réelle (Nist) pour la vitesse de rotation (N) du turbocompresseur (100), un signal principal (HS) et un signal secondaire (NS) sont fournis, dans lequel le signal principal (HS) et le signal secondaire (NS) sont fusionnés afin de rendre plausible la valeur réelle (Nist) pour la vitesse de rotation (N) du turbocompresseur (100),
dans lequel, à l'étape 2), une valeur seuil minimale (SWmin) et une valeur seuil maximale (SWmax) sont calculées à partir du signal principal (HS),
dans lequel un facteur de fuite (LF) est représenté en fonction du signal secondaire (NS), de la valeur seuil minimale (SWmin) et de la valeur seuil maximale (SWmax),
dans lequel la valeur réelle (Nist) de la vitesse de rotation (N) fusionnée est reproduite en fonction du facteur de fuite (LF), et
dans lequel le signal principal (HS) et le signal secondaire (NS) sont corrélés entre eux dans un système sans fuite dans le trajet d'aspiration.

2. Procédé selon la revendication 1,
**caractérisé en ce**
**que** le facteur de fuite (LF) est représenté comme étant égal à 0 lorsque le signal secondaire (NS) est inférieur à la valeur seuil minimale (SWmin),
**ou que** le facteur de fuite est représenté comme étant égal à 1 lorsque le signal secondaire (NS) est supérieur à la valeur seuil maximale (SWmax),
**ou que** le facteur de fuite (LF) est interpolé entre 0 et 1 lorsque le signal secondaire (NS) se situe entre la valeur seuil minimale (SWmin) et la valeur seuil maximale (SWmax).

3. Procédé selon l'une des revendications précédentes,
**caractérisé en ce**
**que** le signal principal (HS) et le signal secondaire (NS) sont fusionnés à l'aide d'un filtre de Kalman (KF).

4. Procédé selon l'une des revendications précédentes,
**caractérisé en ce**
**que,** à l'étape 1), lors de la fourniture de la valeur de consigne (Nsoll) pour la vitesse de rotation (N) du turbocompresseur (100), une limitation de valeur de consigne pour la vitesse de rotation (N) du turbocompresseur (100) est effectuée.

5. Procédé selon l'une des revendications précédentes,
**caractérisé en ce**
**que,** à l'étape 2), la valeur réelle (Nist) pour la vitesse de rotation (N) du turbocompresseur (100) est détectée dans le signal secondaire (NS).

6. Procédé selon l'une des revendications 1 à 4 précédentes,
**caractérisé en ce**
**que,** à l'étape 2), la valeur réelle (Nist) pour la vitesse de rotation (N) du turbocompresseur (100) est fournie dans le signal secondaire (NS) à partir d'un modèle de turbine (TM).

7. Procédé selon l'une des revendications précédentes,
**caractérisé en ce**
**que,** à l'étape 2), la valeur réelle (Nist) pour la vitesse de rotation (N) du turbocompresseur (100) est fournie dans le signal principal (HS) à partir d'un modèle de compresseur (VM), en particulier à l'aide d'une conversion à partir d'une pression de charge réelle (Pist) détectée.

8. Procédé selon l'une des revendications précédentes,
**caractérisé en ce**
**que,** pour la valeur de consigne (Nsoll) pour la vitesse de rotation (N) du turbocompresseur (100) à l'étape 1) et la valeur réelle (Nist) pour la vitesse de rotation (N) du turbocompresseur (100) dans le signal principal (HS) à l'étape 2), le même modèle mathématique et/ou les mêmes paramètres sont utilisés dans le fonctionnement du turbocompresseur (100).

9. Procédé selon l'une des revendications précédentes,
**caractérisé en ce**
**que,** à l'étape 1) et/ou à l'étape 2), au moins une grandeur thermodynamique est utilisée comme paramètre dans le fonctionnement du turbocompresseur (100), telle qu'une température (TvV) en amont du compresseur (101), une pression (PvV) en amont du compresseur (101) et/ou un débit massique (dm/dt) d'un air d'aspiration à travers le compresseur (101).

10. Turbocompresseur (100) permettant de faire fonctionner un compresseur (101),
présentant une unité de commande (10) qui est configurée pour réguler le fonctionnement du turbocompresseur (100) selon un procédé conformément à l'une des revendications précédentes.

11. Produit-programme informatique qui peut être enregistré dans une unité de mémorisation (11) de l'unité de commande (10) selon la revendication précédente et qui, lors d'une exécution au moins partielle dans une unité de calcul (12) de l'unité de commande (10), exécute un procédé selon l'une des revendications 1 à 9 précédentes.
